# EUROPEAN PATENT SPECIFICATION

(11) **EP 3 128 838 B1**
(45) Date of publication and mention of the grant of the patent: **29.04.2020**
(21) Application number: 15722921.2
(22) Date of filing: 09.04.2015
(51) Int. Cl.: A01N 37/02, A01N 37/10, A01P 21/00

(54) **PLANT STIMULATORS, USE THEREOF AND METHOD OF PLANT STIMULATION**
PFLANZENSTIMULATOREN, VERWENDUNG DAVON UND VERFAHREN ZUR PFLANZENSTIMULATION
STIMULATEURS DE PLANTES, UTILISATION DE CEUX-CI ET PROCÉDÉ DE STIMULATION DE PLANTES

(30) Priority: 09.04.2014 CZ 20140237
(43) Date of publication of application: 15.02.2017
(73) Proprietor: AGRA GROUP, a.s., 387 15 Strelske Hostice (CZ)
(72) Inventor: CIGLER, Petr, 160 00 Praha 6 (CZ)
(74) Representative: Hartvichova, Katerina
(86) International application number: PCT/CZ2015/000034
(87) International publication number: WO 2015/154732

(56) References cited:
- GB-A- 1 113 783
- US-A- 3 123 522
- US-A- 3 199 971
- US-A- 3 715 384
- DATABASE CA [Online] CHEMICAL ABSTRACTS SERVICE, COLUMBUS, OHIO, US; XU, XIAN-FANG ET AL: "Synthesis and plant growth regulating activity of diaryl 1,3-phenylenedioxydiacetates", XP002741520, retrieved from STN Database accession no. 2003:195738 & XU XIAN-FANG ET AL: "Synthesis and plant growth regulating activity of diaryl 1,3-phenylenedioxydiacetates", XIBEI SHIFAN DAXUE XUEBAO (ZIRAN KEXUE BAN) = NORTHWEST NORMALUNIVERSITY. JOURNAL (NATURAL SCIENCES EDITION), JOURNAL, vol. 39, no. 1, 1 January 2003 (2003-01-01), pages 39-41, XP009185067, ISSN: 1001-988X
- DATABASE CA [Online] CHEMICAL ABSTRACTS SERVICE, COLUMBUS, OHIO, US; LI, YING-JUN ET AL: "Syntheses and biological activities of .beta.-arylthiopropionic acid derivatives", XP002741521, retrieved from STN Database accession no. 1997:185547 & LI, YING-JUN ET AL: "Syntheses and biological activities of .beta.-arylthiopropionic acid derivatives", YOUJI HUAXUE , 17(1), 92-96 CODEN: YCHHDX; ISSN: 0253-2786, 1997,
- Cultler ET AL: "GROWTH REGULATORS, PLANT", Kirk-Othmer Encyclopedia of Chemical Technology., 1 January 2004 (2004-01-01), pages 1-36, XP055198434, Retrieved from the Internet: URL:http://onlinelibrary.wiley.com/doi/10. 1002/0471238961.1612011403212012.a01.pub2/ pdf [retrieved on 2015-06-25]
- DEREK R. CLIFFORD ET AL: "Effects of fungal and plant esterases on the fungicidal activity of nitrophenyl esters", PESTICIDE SCIENCE, vol. 8, no. 1, 1 February 1977 (1977-02-01), pages 13-22, XP055197029, ISSN: 0031-613X, DOI: 10.1002/ps.2780080103

## Description

### Field of Art

The present invention relates to plant stimulators, use thereof for efficient plant cultivation, to a method of plant stimulation and to a preparation containing the plant stimulators.

### Background Art

Many plant growth stimulators are known, either based on natural or synthetic substances, e.g. algae or garlic extracts as the natural based stimulators, and purine derivatives, nitrophenolates or some brassinosteroids as the synthetically prepared stimulators.

Plant stimulators act on higher intake and use of nutrients by a plant; they enhance transportation processes within cells, reduce leaf damages caused by oxidative stress, limit stresses during vegetation period, and help to faster regeneration of damaged parts of a plant. These influences are manifested by good rooting, intensive plant growth and generally higher crop yield.

Xu et al., Xibei Shifan Daxue Xuebao, Ziran Kexueban (2003), 39(1), 39-41 discloses dinitrophenyl 1,3-phenylenedioxydiacetates, their synthesis and growth-promoting activity of some of these compounds in primary biological tests. Li et al., Youji Huaxue (1997), 17(1), 92-96 discloses arylthiopropionic acid esters bearing, inter alia, nitrophenyl moiety, and their plant growth stimulating activity. US 3123522, GB 1113783 and US 3715384 disclose pesticidal use of nitrophenyl esters.

In view of economic benefits arising from plant stimulators application, there persists the need for more efficient plant stimulators.

### Disclosure of the Invention

The present invention provides plant stimulators, containing nitroaryl esters of carboxylic acids. The compounds of the invention show an unexpectedly high stimulatory actitivity for plants.

Thus, the object of the present invention is use of compounds of general formula I 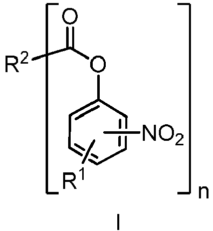
wherein n is 1;
the NO₂ substituent is located in one of the positions ortho, meta, or para, relative to the ester group; R¹ is located in one of the positions ortho, meta, or para, relative to the ester group, and is selected from the group comprising hydrogen, NO₂, (C₁ to C₃)alkoxy, halogen and SO₃M, wherein M represents hydrogen, alkali metal, NH₄⁺ or NR₄⁺ and R represents hydrogen, (C₁ to C₄)alkyl or benzyl;
R² is selected from the group comprising (C₁ to C₂₀)alkyl (preferably (C₁ to C₆)alkyl); (C₂ to C₂₀)alkenyl (preferably (C₂ to C₆)alkenyl); (C₃ to C₆)cycloalkyl; (C₁ to C₆)hydroxyalkyl (preferably hydroxymethyl, 1-hydroxyethyl); (trimethylammonium)methyl; acetamidomethyl; 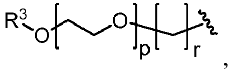 wherein R³ is hydrogen or alkyl, p = 1 to 10 and r = 1, 2 or 3; and alkyl or alkenyl chain derived from natural lipophilic carboxylic acids present in natural oils such as coconut oil, hydrogenated coconut oil, tallow, hydrogenated tallow, palm oil, etc., so that the substance of general formula (I) can be formed by a mixture of compounds in which the composition of the alkyl and alkenyl R² moieties corresponds to the composition of the fatty acids from the used natural oil. These fatty acids include caprylic, caprinic, lauric, myristic, palmitic, stearic, palmitoleic or oleic acid;
for stimulation of plants.

The general formula (I) is intended to encompass salts and solvates.

The invention further encompasses a method of stimulation of plants, comprising the step of applying at least one compound of general formula (I) onto seeds, plant or fruit. The application can preferably be carried out by spraying the plant or fruit, or by seed dressing.

The compounds of the invention can be applied in the form of a composition for stimulation of plants, containing at least one compound of general formula (I).
Apart from the compound(s) of general formula (I), the composition may further comprise formulation substances such as solvents, fertilizers, fillers, surface active agents, anti-foaming agents and auxiliary substances.
The composition may be supplied in the form of a concentrate to be diluted by the end user, or in the form of a diluted preparation. For diluting the concentrated preparation, water, liquid fertilizers, micronutrient solutions, biological organism solutions or solvents may be used.

"Solvents" in this description represent solvents commonly used in agriculture, such as glycol ethers (e.g., diethylene glycol monomethyl ether, diethylene glycol dimethyl ether, dipropylene glycol monomethyl ether, dipropylene glycol dimethyl ether, triethylene glycol monomethyl ether, triethylene glycol dimethyl ether, diethylene glycol monobutyl ether), alcohols (e.g., methanol, ethanol, propanol, butanol, tetrahydrofurfuryl alcohol, glycerol formal), diols (e.g., ethylene glycol, propylene glycol, butylene glycol), triols (e.g., glycerol), amides (e.g., N-methylpyrrolidone, dimethyl formamide, dimethyl acetamide), ketones (e.g., cyclohexanone, acetone), carboxylic acid esters (e.g., methyl malonate, ethyl malonate, methyl maleate, ethyl maleate, methyl lactate, ethyl lactate, methyl glycolate, ethyl glycolate), water, mineral and plant oils and derivatives thereof.

By "fertilizers", solid or liquid fertilizers commonly used in agriculture are meant, such as urea, salts containing nitrogen, phosphorus, potassium, magnesium, calcium, sulfur, silicon, micronutrients.

"Filler" means natural or synthetic, organic or inorganic substance which facilitates the application of the active substance of general formula (I) when admixed to it. The filler is inert. The fillers commonly used in agriculture can be used, such as kaolin, montmorillonite, attapulgite, bentonite, calcite, dolomite, natural or synthetic silicates and aluminosilicates. These fillers can also be used as mixtures.

Surface active agents are ionic or non-ionic surfactants, wetting agents or emulsifiers, such as salts of naphtalenesulfonic, phenolsulfonic and ligninesulfonic acids, polycondensates of ethyleneoxide with fatty alcohols or amines, substituted phenols (mainly alkylphenols and arylphenols), salts of sulfosuccinates, salts of alkylbenzenesulfonic acid, taurine derivatives (mainly alkyltaurates), esters of phosphoric acid with polyethoxylalcohols or phenols, fatty acid esters with polyols and derivatives of the above mentioned compounds containing sulfate, sulfonate or phosphate groups. The content of surface active agents in a mixture is preferably in the range of from 2 to 80 % (w/w).

"Anti-foaming agent" means any substance, which decreases a foam stability. Preferably, silicon based compounds might be used.

"Auxiliary substances" should be understood as colloidal stabilizers, adhesives, binders and rheological modifiers.

Generally, compounds of the general formula (I) can be combined with any liquid or solid additive, which is commonly used in pesticides or fertilizers.

The preparation can preferably contain from 0.01 to 99 % (w/w) of the compound of the general formula (I). When the formulation is a solution concentrate, it might contain preferably from 0.02 to 70 % (w/w) of the active compound (I), most preferably from 0.04 to 40 % (w/w) of the active compound (I).

In a preferred embodiment of the present invention, compounds of general formula (I) are 2-nitrophenyl acetate, 4-nitrophenyl acetate, 2-methoxy-5-nitrophenyl acetate, 2,4-dinitrophenyl acetate, 2-nitrophenyl propionate, 4-nitrophenyl propionate, 2-methoxy-5-nitrophenyl propionate and 2,4-dinitrophenyl propionate.

Preparations can be prepared in different forms, suitable directly or upon dilution for applications in agriculture, such as for example solutions, granules or microgranules dispersable in water, wettable powders, water dispersable tablets, suspensions, suspension concentrates, emulsifiable powders, emulsifiable granules or microgranules, emulsifiable suspension concentrates, microemulsions. Wettable powders may be filled in a soluble coating, use of such coating prevents undesirable dusting and potential aspiration by a user.

The preparations might contain other substances, such as insecticides, fungicides, bactericides, attractants, acaricides, pheromones and other substances with biological activity. The content of such compounds extends the efficiency of the preparation. Examples of substances utilizable for preparation of the above mentioned preparations with extended efficiency are specified in the following list:
- a substance capable of inhibiting nucleic acid synthesis, e.g. benalaxyl, benalaxyl-M, bupirimate, clozylacone, dimethirimole, ethirimole, furalaxyle, hymexazole, mefenoxame, metalaxyl, metalaxyl-M, ofurace, oxadixyle, oxolinic acid;
- a substance capable of inhibiting mitosis and cell division, e.g. benomyl, carbendazim, diethofencarb, ethaboxam, fuberidazole, pencycuron, thiabendazole, thiophanate-methyl, zoxamide;
- a substance capable of inhibiting respiration, e.g. diflumetorim, boscalid, carboxin, fenfuram, flutolanil, furametpyr, furmecyclox, mepronil, oxycarboxin, penthiopyrad, thifluzamide, amisulbrom, azoxystrobin, cyazofamid, dimoxystrobin, enestrobin, famoxadone, fenamidone, fluoxastrobin, kresoxim-methyl, metominostrobin, orysastrobin, picoxystrobin, pyraclostrobin, trifloxystrobin
- a substance capable of inhibiting oxidative phosphorylation, e.g. dinocap, fluazinam, meptyldinocap;
- a substance capable of inhibiting ATP synthesis, e.g. fentin acetate, fentin chloride, fentin hydroxide, silthiofam;
- a substance capable of inhibiting amino acid and protein biosynthesis, e.g. andoprim, blasticidin-S, cyprodinil, kasugamycin, kasugamycin hydrochloride hydrate, mepanipyrim, pyrimethanil;
- a substance capable of inhibiting signal transmission, e.g. fenpiclonil, fludioxonil, chinoxyfen;
- a substance capable of inhibiting lipide and membrane components synthesis, e.g. biphenyl, chlozolinate, edifenphos, etridiazol, iodocarb, iprobenfos, iprodione, isoprothiolan, procymidon, propamocarb, propamocarb hydrochlorid, pyrazophos, tolclofos-methyl, vinclozolin;
- a substance capable of inhibiting ergosterole biosynthesis, e.g. aldimorph, azaconazol, bitertanol, bromuconazol, cyproconazol, diclobutrazol, difenoconazol, diniconazol, diniconazol-M, dodemorph, dodemorph acetate, epoxiconazol, etaconazol, fenarimol, fenbuconazol, fenhexamid, fenpropidin, fenpropimorph, fluquinconazol, flurprimidol, flusilazol, flutriafol, furconazol, furconazol-cis, hexaconazol, imazalil, imazalil sulfate, imibenconazol, ipconazol, metconazol, myclobutanil, naftifin, nuarimol, oxpoconazol, paclobutrazol, pefurazoate, penconazol, prochloraz, propiconazol, prothioconazol, pyributicarb, pyrifenox, simeconazol, spiroxamin, tebuconazol, terbinafin, tetraconazol, triadimefon, triadimenol, tridemorph, triflumizole, triforin, triticonazol, uniconazol, viniconazol, voriconazol;
- a substance capable of inhibiting cell-wall synthesis, e.g. benthiavalicarb, dimethomorph, flumorph, iprovalicarb, mandipropamid, polyoxins, polyoxorim, validamycin A;
- a substance capable of inhibiting melanine biosynthesis, e.g. carpropamid, diclocymet, fenoxanil, ftalid, pyroquilon, tricyclazol;
- a substance capable of causing induced resistence against pathogenes and pests, e.g. acibenzolar-S-methyl, probenazol, tiadinil;
- a substance with a wide therapeutic effect spectra, e.g. Bordeaux mixture, captafol, captan, chlorothalonil, copper naphtenate, copper(II) oxide, copper(II) oxychloride, Cu(II)-Ca(II) oxychloride, copper(II) hydroxide, copper sulfate, basic copper sulfate, dichlofluanid, dithianon, dodine, dodine free base, ferbam, fluorofolpet, folpet, guazatine, guazatine acetate, iminoktadine, iminoktadine albesilate, iminoktadine triacetate, mancopper, mancozeb, maneb, metiram, metiram zinc, copper (II) bis(8-hydroxyquinolinate), propineb, sulphur and sulphur containing preparations, e.g. calcium polysulfide, tolylfluanid, zineb, ziram;
- a compound selected from the following list:
   (2E)-2-(2-{[6-(3-chloro-2-methylphenoxy)-5-fluoropyrimidine-4-yl]oxy}phenyl)-2-(metho xyimino)-N-methylacetamide, (2E)-2-{2-[({[(1E)-1-(3-1{[(E)-1-fluoro-2-phenylvinyl]oxy}phenyl)ethylidene]amino}oxy) methyl]phenyl}-2-(methoxyimino)-N-methylacetamide, 1-(4-chlorophenyl)-2-(1H-1,2,4-triazole-1-yl)cycloheptanol, 1-[(4-methoxyphenoxy)methyl]-2,2-dimethylpropyl-1H-imidazole-1-carboxylate, 1-methyl-N-[2-(1,1,2,2-tetrafluorethoxy)phenyl]-3-(trifluormethyl)-1H-pyrazole-4-carboxa mide, 2,3,5,6-tetrachloro-4-(methylsulphonyl)pyridine, 2-butoxy-6-iodo-3-propyl-4H-chromen-4-one, 2-chloro-N-(1,1,3-trimethyl-2,3-dihydro-1H-inden-4-yl)nicotinamide, 2-phenylphenol and its salts, 3-(difluoromethyl)-1-methyl-N-[2-(1,1,2,2-tetrafluoroethoxy)phenyl]-1H-pyrazole-4-carbo xamide, 3-(difluoromethyl)-N-[(9R)-9-isopropyl-1,2,3,4-tetrahydro-1,4-methanonaphtalen-5-yl]-1-methyl-1H-pyrazole-4-carboxamide, 3-(difluoromethyl)-N-[(9S)-9-isopropyl-1,2,3,4-tetrahydro-1,4-methanonaphtalen-5-yl]-1-methyl-1H-pyrazole-4-carboxamide, 3-(difluoromethyl)-N-[4'-(3,3-dimethylbut-1-yn-1-yl)biphenyl-2-yl]-1-methyl-1H-pyrazole-4-carboxamide, 3,4,5-trichloropyridine-2,6-dicarbonitrile, 3-[5-(4-chlorophenyl)-2,3-dimethylisoxazolidine-3-yl]pyridine, 3-chloro-5-(4-chlorophenyl)-4-(2,6-difluorophenyl)-6-methylpyridazine, 4-(4-chlorophenyl)-5-(2,6-difluorophenyl)-3,6-dimethylpyridazine, 5-chloro-7-(4-methylpiperidine-1-yl)-6-(2,4,6-trifluorophenyl)[1,2,4]triazolo[1,5-a]pyrimid ine, 8-hydroxyquinoline sulfate, benthiazole, bethoxazine, capsimycine, carvone, quinomethionate, cufraneb, cyflufenamid, cymoxanil, dazomet, debacarb, dichlorofen, diclomezine, dicloran, difenzoquat, difenzoquat methylsulfate, diphenylamine, ecomate, ferimzone, flumetover, fluopicolid, fluoroimide, flusulfamide, fosetyl-aluminium, fosetyl-calcium, fosetyl-sodium, hexachlorobenzene, irumamycin, isotianil, methasulfocarb, methyl (2E)-2-{2-[({cyclopropyl[(4-methoxyphenyl)imino]methyl}thio)methyl]phenyl}-3-methox yacrylate, methyl 1-(2,2-dimethyl-2,3-dihydro-1H-inden-1-yl)-1H-imidazole-5-carboxylate, methyl isothiocyanate, metrafenon, mildiomycin, N-(3',4'-dichloro-5-fluorobiphenyl-2-yl)-3-(difluoromethyl)-1-methyl-1H-pyrazole-4-carbo xamide, N-(3-ethyl-3,5,5-trimethylcyclohexyl)-3-(formylamino)-2-hydroxybenzamide, N-(4-chloro-2-nitrophenyl)-N-ethyl-4-methylbenzenesulfonamide, N-(4-chlorobenzyl)-3-[3-methoxy-4-(prop-2-yn-1-yloxy)phenyl]propanamide, N-[(4-chlorophenyl)(cyano)methyl]-3-[3-methoxy-4-(prop-2-yn-1-yloxy)phenyl]propanami de, N-[(5-bromo-3-chloropyridin-2-yl)methyl]-2,4-dichloronicotinamide, N-[1-(5-bromo-3-chloropyridin-2-yl)ethyl]-2,4-dichloronicotinamide, N-[1-(5-bromo-3-chloropyridin-2-yl)ethyl]-2-fluoro-4-iodonicotinamide, N-[2-(1,3-dimethylbutyl)phenyl]-5-fluoro-1,3-dimethyl-1H-pyrazole-4-carboxamide, N-{(Z)-[(cyclopropylmethoxy)imino][6-(difluoromethoxy)-2,3-difluorophenyl]methyl}-2-p henylacetamide, N-{2-[1,1'-bi(cyclopropyl)-2-yl]phenyl}-3-(difluormethyl)-1-methyl-1H-pyrazole-4-carbox amide, N-{2-[3-chloro-5-(trifluoromethyl)pyridin-2-yl]ethyl}-2-(trifluoromethyl)benzamide, natamycine, N-ethyl-N-methyl-N'-{2-methyl-5-(trifluoromethyl)-4-[3-(trimethylsilyl)propoxy]phenyl}i midoformamide, N-ethyl-N-methyl-N'-{2-methyl-5-(difluoromethyl)-4-[3-(trimethylsilyl)propoxy]phenyl}i midoformamide, nickel (II) dimethyldithiocarbamate, nitrothal-isopropyl, O-{1-[(4-methoxyphenoxy)methyl]-2,2-dimethylpropyl}1H-imidazole-1-carbothioate, octhilinon, oxamocarb, oxyfenthiin, pentachlorophenol and its salts, phosphorous acid and its salts, piperaline, propamocarb fosetylate, propanosin-sodium, proquinazid, pyribencarb, pyrrolnitrine, quintozene, S-allyl-5-amino-2-isopropyl-4-(2-methylphenyl)-3-oxo-2,3-dihydro-1H-pyrazole-1-carboth ioate, teclophtalam, tecnazene, triazoxide, trichlamide, valiphenal, zarilamid;
- a compound with bactericidal effects, e.g. bronopol, dichlorofen, nitrapyrin, nickel(II) dimethyldithiocarbamate, kasugamycin, octhilinon, furancarboxylic acid, oxytetracycline, probenazol, streptomycine, teclophtalam, copper(II) sulfate and other copper containing compounds and preparations.

The preparation might be used for plant growth stimulation by its application on the plants, on their seeds or fruits. Among the crop-plants, which are capable of being stimulated in this way, belong e.g. cotton-plant, flax, grape vine, crops belonging to families Rosaceae (e.g. apple-trees and pear-trees, apricots, almond-trees and peach-trees, strawberry), Ribesioidae, Juglandaceae, Betulaceae, Anacardiaceae, Fagaceae, Moraceae, Oleaceae, Actinidaceae, Lauraceae, Musaceae, Rubiaceae, Theaceae, Sterculiceae, Rutaceae (e.g. lemon-tree, orange-tree and grapefruit-tree), Solanaceae (e.g. tomato), Liliaceae, Asteraceae (e.g. lettuce), Umbelliferae, Cruciferae, Chenopodiaceae, Cucurbitaceae, Papilionaceae (e.g. peas), Graminae (e.g. corn, grass or grains such as wheat, barley, oats, rye or triticale), Asteraceae (e.g. sun-flower), Poaceae (e.g. rice, sorghum), Cucurbitaceae (e.g. cucumber, pumpkin, melon, calabaza), Brassicaceae (e.g. cabbage, oilseed rape, white mustard), Cruciferae (e.g. oilseed rape), Apiaceae (e.g. carrots, parsley, celery), Alliaceae (e.g. onion), Fabacae (e.g. peanut), Papilionaceae (e.g. soybean, lentils, pea, beans), Solanaceae (e.g. potatoes, peppers), Chenopodiaceae (e.g. sugar beet, spinach); generally agricultural, technical and forest crops and their genetically modified analogues.

Preferably, the preparation might be used for protection of grains from the Graminae family, e.g. wheat, barley, oats, rye or triticale, and the Brassicaceae family, e.g. oilseed rape, white mustard or cabbage.

The composition may be in the form of solution and contain 0.04 to 10 wt. % of compounds of general formula (I), solvent and optionally further substances. The solvent is preferably dipropylene glycol monomethyl ether or propylene glycol.

The dose of the compounds of general formula (I) for foliar application can be in the range of 0.005 to 50 g/ha, preferably 0.01 to 40 g/ha, more preferably 0.02 to 25 g/ha.

Compounds according to the present invention can be prepared using common synthetical methods and their preparation lies within a chemist's knowledge, for example acylation of corresponding (substituted) phenols using acyl chlorides. Compounds, which are not novel, are commercially available in certain cases.

The invention is further explained in following examples which should not be construed as limiting.

### Examples

### Example 1

### Preparation of solutions containing compounds of the general formula (I)

Solutions **A, P**, and **IS** were prepared by mixing from the following substances:

**Table 1**

| **Compound** | **Formulation [wt. %]** | | |
|---|---|---|---|
| | **A** | **P** | **IS** |
| 4-nitrophenylacetate | 1.012 | - | - |
| 2-nitrophenylacetate | 0.675 | - | - |
| 2,4-dinitrophenylacetate | 0.044 | - | - |
| 2-methoxy-5-nitrophenylacetate | 0.331 | - | - |
| 4- nitrophenylpropionate | - | 1.090 | - |
| 2- nitrophenylpropionate | - | 0.727 | - |
| 2-methoxy-5-nitrophenylpropionate | - | 0.047 | - |
| 2,4-dinitrophenylpropionate | - | 0.353 | - |
| Bis(4-nitrophenyl) isophthalate - comparative compound | - | - | 1.141 |
| Bis(2-nitrophenyl) isophthalate - comparative compound | - | - | 0.761 |
| Bis(2,4-dinitrophenyl) isophthalate - comparative compound | - | - | 0.048 |
| Bis(2-methoxy-5-nitrophenyl) isophthalate - comparative compound | - | - | 0.368 |
| Dipropyleneglycole monomethylether | 97.94 | 97.78 | - |
| *N*-methyl-2-pyrrolidone | - | - | 97.68 |

### Example 2

### Field-testing on grains

In 2013, field-testing was set up with wheat. The experimental field was chosen in a warm, beet-producing region with sufficiency of precipitations and a brown soil type. The growths were treated with common agrotechnology. Solutions **A** and **P,** prepared according to Example 1 and dissolved in water, were applied in a growth phase BBCH 51/55 (heading) as a foliar spray. The dosages are listed in Table 2. A commercial preparation N-fenol mix (AGRA GROUP a.s., Czech Republic) was used for comparison. N-fenol mix contains as active substances sodium salts of 4-nitrophenol, 2-nitrophenol and 2-methoxy-5-nitrophenol; sodium salt of 2,4-dinitrophenol is present as impurity. The contents of the components in the solutions **A** and **P** were set in such a way that the molar contents of the nitrophenol derivatives in the foliar spray solutions exactly corresponded to the molar content of the corresponding nitrophenols in the N-fenol mix preparation. Further, a variant containing double dossage of **A** and **P** solutions was also included in the experiment. Pure water spray was used as a negative control.

After the vegetation season passed, the plants were harvested and their yield was determined. In all cases a positive influence of preparations **A** and **P** on the yield was observed, increasing the yield by 10.4 to 18.1 % (compared to the negative control, see Table 2). Furthermore, no phytotoxicity was observed.

**Table 2**

| **Variant** | **Dosage (ml/ha)** | **Yield [t/ha]** | **% of control** |
|---|---|---|---|
| **A** | 200 | 7.92 | 110.4 |
| | 400 | 7.96 | 110.9 |
| **P** | 200 | 8.13 | 113.3 |
| | 400 | 8.47 | 118.1 |
| *N-fenol mix* | *200* | *7.50* | *104.5* |
| *Control (pure water)* | - | *7.17* | *100.0* |

### Example 3 - Comparative example

### Field-testing on grains

In 2014, field-testing was set up with wheat. The experimental field was chosen in a warm, beet-producing region with sufficiency of precipitations and a brown soil type. The growths were treated with common agrotechnology. Solution **IS,** prepared according to Example 1 and dissolved in water, was applied in a growth phase BBCH 51/55 (heading) as a foliar spray. The dosage is listed in Table 3. Pure water spray was used as a negative control.

After the vegetation season passed, the plants were harvested and their yield was determined. A positive influence of preparation **IS** on the yield was observed, increasing the yield by 6.2 % (compared to the negative control, see Table 3). Furthermore, no phytotoxicity was observed.

**Table 3**

| **Variant** | **Dosage (ml/ha)** | **Yield [t/ha]** | **% of control** |
|---|---|---|---|
| **IS** | 400 | 7.73 | 106.2 |
| Control (pure water) | - | 7.28 | 100.0 |

## Claims

1. Use of compound of general formula I 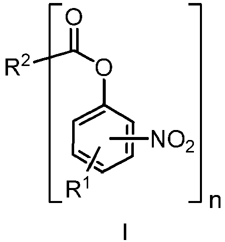
wherein n is 1;
the NO₂ substituent is located in one of the positions ortho, meta, or para, relative to the ester group; R¹ is located in one of the positions ortho, meta, or para, relative to the ester group, and is selected from the group comprising hydrogen, NO₂, (C₁ to C₃)alkoxy, halogen and SO₃M,
wherein M represents hydrogen, alkali metal, NH₄⁺ or NR₄⁺ and R represents hydrogen, (C₁ to C₄)alkyl or benzyl;
R² is selected from the group comprising (C₁ to C₂₀)alkyl; (C₂ to C₂₀)alkenyl; (C₃ to C₆)cycloalkyl; (C₁ to C₆)hydroxyalkyl; (trimethylammonium)methyl; acetamidomethyl; 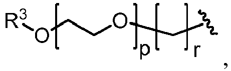 wherein R³ is hydrogen or alkyl, p = 1 to 10 and r = 1, 2 or 3; and alkyl or alkenyl chain derived from natural lipophilic carboxylic acids present in natural oils such as coconut oil, hydrogenated coconut oil, tallow, hydrogenated tallow, palm oil;
for growth stimulation of plants.

2. Use according to claim 1, wherein in compounds of general formula I, R² is selected from (C₁ to C₆)alkyl, (C₂ to C₆)alkenyl, hydroxymethyl, 1-hydroxyethyl.

3. A method of stimulation of growth of plants, **characterized in that** it comprises the step of applying at least one compound of general formula (I) according to claim 1 or 2 onto seeds, plant or fruit.

## Patentansprüche

1. Verwendung einer Verbindung der allgemeinen Formel I 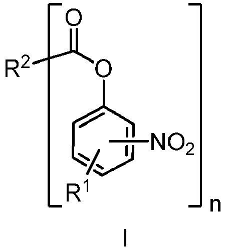
worin n ist 1;
der NO₂-Substituent befindet sich in einer der Positionen ortho, meta oder para relativ zur Estergruppe; R¹ befindet sich in einer der Positionen ortho, meta oder para relativ zur Estergruppe und ist ausgewählt aus der Gruppe bestehend aus Wasserstoff, NO₂, (C₁-C₃)Alkoxy, Halogen und SO₃M, wobei M ist aus Wasserstoff, Alkalimetall, NH₄⁺ und NR₄⁺ ausgewählt; und R ist aus Wasserstoff, (C₁-C₄)Alkyl und Benzyl ausgewählt;
R² ausgewählt ist aus der Gruppe umfassend (C₁-C₂₀)Alkyl; (C₂-C₂₀)Alkenyl; (C₃-C₆)Cycloalkyl; (C₁-C₆)Hydroxyalkyl; (Trimethylammonium)methyl; Acetamidomethyl; 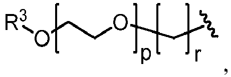 worin R³ Wasserstoff oder Alkyl ist, p = 1 bis 10 und r = 1, 2 oder 3; und Alkyl- oder Alkenylkette, die von natürlichen lipophilen Carbonsäuren abgeleitet ist, die in natürlichen Ölen wie Kokosnussöl, hydriertem Kokosnussöl, Talg, hydriertem Talg, Palmöl vorhanden sind;
zur Wachstumsstimulation von Pflanzen.

2. Verwendung nach Anspruch 1, wobei in Verbindungen der allgemeinen Formel I, R² ausgewählt ist aus (C₁-C₆)Alkyl, (C₂-C₆)Alkenyl, Hydroxymethyl, 1-Hydroxyethyl.

3. Verfahren zur Wachstumsstimulation von Pflanzen, **dadurch gekennzeichnet, dass** es den Schritt des Aufbringens mindestens einer Verbindung der allgemeinen Formel I gemäß Anspruch 1 oder 2 auf Samen, Pflanzen oder Früchte umfasst.

## Revendications

1. Utilisation d'un composé de formule générale I 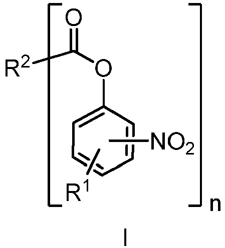
où n est 1;
le substituant NO₂ est situé dans l'une des positions ortho, méta ou para, par rapport au groupe ester; R¹ est situé dans l'une des positions ortho, méta ou para, par rapport au groupe ester, et est choisi dans le groupe comprenant l'hydrogène, NO₂, (C₁ à C₃) alcoxy, halogène et SO₃M, où M représente l'hydrogène, un métal alcalin , NH₄⁺ ou NR₄⁺ et R représente l'hydrogène, (C₁ à C₄) alkyle ou benzyle;
R² est choisi dans le groupe comprenant (C₁ à C₂₀) alkyle; (C₂ à C₂₀) alcényle; (C₃ à C₆) cycloalkyle; (C₁ à C₆) hydroxyalkyle; (triméthylammonium)méthyle; acétamidométhyle; 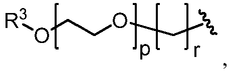 où R³ est hydrogène ou alkyle, p = 1 à 10 et r = 1, 2 ou 3; et chaîne alkyle ou alcényle dérivée d'acides carboxyliques lipophiles naturels présents dans les huiles naturelles telles que l'huile de noix de coco, l'huile de noix de coco hydrogénée, le suif, le suif hydrogéné, l'huile de palme;
pour la stimulation de la croissance des plantes.

2. Utilisation selon la revendication 1, dans laquelle dans les composés de formule générale I, R² est choisi parmi (C₁ à C₆) alkyle, (C₂ à C₆) alcényle, hydroxyméthyle, 1-hydroxyéthyle.

3. Procédé de stimulation de la croissance des plantes, **caractérisé en ce qu'**il comprend l'étape d'application d'au moins un composé de formule générale I selon la revendication 1 ou 2 sur des graines, plante ou fruit.
